Europäisches Patentamt

European Patent Office

Office européen des brevets

(11) Veröffentlichungsnummer: **0 050 726**
**B1**

(12) **EUROPÄISCHE PATENTSCHRIFT**

(45) Veröffentlichungstag der Patentschrift: **21.01.87**

(21) Anmeldenummer: **81106943.4**

(22) Anmeldetag: **04.09.81**

(51) Int. Cl.⁴: **F 23 N 1/02,  F 23 K 5/00,**
**B 22 D 31/00**

(54) **Gaszufuhreinrichtung.**

(30) Priorität: **24.10.80 DE 3040154**

(43) Veröffentlichungstag der Anmeldung:
**05.05.82 Patentblatt 82/18**

(45) Bekanntmachung des Hinweises auf die
Patenterteilung:
**21.01.87 Patentblatt 87/04**

(84) Benannte Vertragsstaaten:
**DE FR GB IT**

(56) Entgegenhaltungen:
**DE-A-2 440 040**
**DE-B-2 758 179**
**DE-C- 949 373**

(73) Patentinhaber: **ROBERT BOSCH GMBH**
**Postfach 50**
**D-7000 Stuttgart 1 (DE)**

(72) Erfinder: **Drexel, Peter**
**Plieningerstrasse 33**
**D-7031 Steinenbronn (DE)**
Erfinder: **Kaden, Hans-Dieter**
**Holzwiesenstrasse 17**
**D-7410 Reutlingen 22 (DE)**
Erfinder: **Martini, Helmut, Dipl.-Ing.**
**Kalkofenweg 23**
**D-7252 Weil der Stadt (DE)**

Courier Press, Leamington Spa, England.

## Beschreibung

### Stand der Technik

Die Erfindung geht aus von einer Gaszufuhreinrichtung nach der Gattung des patentanspruchs. Bei den besonders in Bezug genommenen Anlagen zum thermischen Entgraten von Werkstücken erfolgt ein ungezielter Abtrag, bei dem das gesamte Werkstück einem Hitzeschock ausgesetzt wird. Bevorzugt abgetragen werden Ecken und Kanten, da diese Stellen bei großer Oberfläche und kleinen Volumen besonders viel Wärme aufnehmen und somit oxidiert bzw. verbrannt werden. Der Hitzeschock wird durch das Abbrennen eines Brenngas-Sauerstoff-Gemisches erzeugt, wobei Wasserstoff oder Erdgas bzw. Methan als Brenngas verwendet werden. Die Gaskomponenten werden vom Vorrat in je einen Dosierzylinder eingelassen und mittels einer Druckvorrichtung unter erheblicher Komprimierung über Ventile in einen Brennraum geleitet, wobei ihre Vermischung in einem separaten Mischblock stattfindet. Die Kompression der Gaskomponenten ist dabei gleich groß und entspricht gegen Ende der Füllung des Brennraums dem Druck, der dort für den jeweils optimalen Brennvorgang erforderlich ist. Je höher das Brenngas-Sauerstoff-Gemisch komprimiert worden ist, umso größer ist die Energie und umso stärker die Entgratwirkung. Die Verbrennungstemperatur des Gases liegt im Bereich von 2500 bis 3500° C. Mit der Erhöhung des Druckes steigt die pro Volumeneinheit freigesetzte Wärmemenge. Die in der Entgratkammer auftretenden Drücke des Brenngas-Sauerstoff-Gemisches liegen bei 40 bar bei Füllung der Entgratkammer.

Zur Steuerung eines Entgratprozesses stehen bekanntlich zwei Einflußgrößen zur Verfügung, nämlich die Gasmenge in der Brennkammer — sie bestimmt Temperatur und Verbrennungsgeschwindigkeit — und das Mischungsverhältnis der Gaskomponenten, das maßgeblich die Verbrennungsdauer beeinflußt. Metalle werden in jedem Falle mit einem Sauerstoffüberschuß entgratet, da sonst nur ein Anschmelzen aber keine Verbrennung der Grate erfolgen würde. Je mehr Sauerstoff in der Brennkammer vorhanden ist, umso intensiver ist die Entgratwirkung in bezug auf die Radienbildung und die mengenmäßige Gratbeseitigung.

Bei bekannten Anlagen werden die Gasgemisch-Komponenten in jeweils einen Dosierzylinder eingeleitet, und danach mittels eines Kolbens im Dosierzylinder in den Brennraum weitergeleitet. Dieser Vorgang kann sich zum Druckaufbau im Brennraum mehrfach wiederholen. Der Kolbenhub ist stufenlos verstellbar, jedoch für Brenngas und Sauerstoff immer gleich groß. Der Druck in den Dosierzylindern ist über in den Zuleitungen angeordnete Reduzierventile getrennt und unabhängig voneinander einstellbar. Mit Hilfe dieser Reduzierventile kann der Druck beider Gaskomponenten in den Dosierzylindern beispielsweise von 0 bis 10 bar variiert werden. Dies erschwert die Bedienung der Entgratanlage in erheblichem Maße, da stets drei Einstellungen, nämlich die Einstellung des Zylindervolumens und die Einstellung der beiden Reduzierventile überprüft werden müssen, bevor man den Entgratvorgang auslöst. Die einzustellenden Parameter sind abhängig von Form, Größe und Material der zu entgratenden Werkstücke unterschiedlich und müssen anhand von Tabellen, oder soweit dies nicht möglich ist, empirisch ermittelt werden. Dabei muß die Bedienungsperson bei den bekannten Anlagen drei Größen, nämlich das Füllvolumen des Dosierzylinders, den Fülldruck im Sauerstoff-Dosierzylinder und den Fülldruck im Brenngas-Dosierzylinder in ein Verhältnis zueinander bringen, das optimale Entgratergebnisse zeitigt.

### Vorteile der Erfindung

Die erfindungsgemäße Einrichtung mit den kennzeichnenden Merkmalen des Patentanspruchs hat demgegenüber den Vorteil, daß sich beliebige Gaszylinderfülldrücke und somit beliebige Brenngasgemische im Brennraum sehr einfach einstellen lassen.

Ausgehend von der physikalischen Gegebenheit, daß Masse = Dichte. Volumen ist, ist beim Anmeldungsgegenstand die Variation beider Parameter (Dichte, Volumen) zur Erzeugung unterschiedlicher Mengen- bzw. Masseverhältnisse vorgesehen. Dadurch, daß eine Komponente des Gasgemisches mit konstantem Druck in den zugehörigen Dosierzylinder eingelassen wird, während die zweite Gaskomponente mittels einer Drucksteuerstufe nur in einer ganz bestimmten jedoch variablen Menge dem weiteren, zugehörigen Dosierzylinder zugegeben wird, können in den Gasdosierzylindern unterschiedliche Drükke durch unterschiedliche Dichte der Gasbestandteile aufgebaut werden, wobei die Menge des Gasgemisches außerdem durch Verändern des Kolbenhubes in den Dosierzylindern variiert werden kann.

Die erfindungsgemäße Einrichtung ist selbstverständlich nicht auf eine Anlage zum thermischen Entgraten von Werkstücken beschränkt, da eine derartige Anlage zahlreiche Anwendungsgebiete hat. So kann mit der in der Beschreibung näher dargestellten Anlage ebenso z.B. das "Retikulieren von Schaumstoff" nach DE—Patent 15 04 096 oder das "Verfahren zum Entfernen von zusammenhängenden porösen Formen" nach dem DE—Patent 23 22 760 durchgeführt werden. Maßgeblich ist der Bearbeitungsvorgang an einem Werkstück mittels eines explosiven Gasgemisches in einer abgeschlossenen Kammer.

### Zeichnung

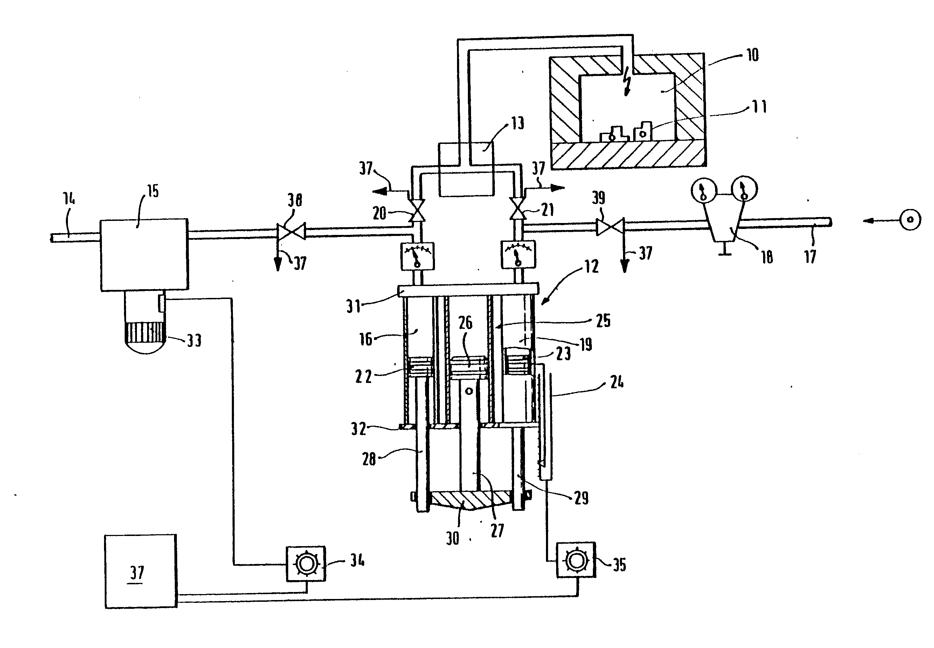

Ein Ausführungsbeispiel der Erfindung ist in der Zeichnung dargestellt und in der nachfolgenden Beschreibung unter Angabe weiterer Vorteile näher erläutert. Die Figur zeigt eine schematische Darstellung der Gaszufuhreinrichtung mit den zum Verständnis der Erfindung notwendigen Bauelementen.

Beschreibung der Erfindung

Das im Brennraum 10 z.B. zum Entgraten von Werkstücken 11 benötigte Brenngas-Sauerstoff-Gemisch wird mittels einer Dosieranlage 12 über einen Mischblock 13 dem Brennraum 10 zugeführt. Über die Sauerstoffzufuhrleitung 14 wird der Sauerstoff mit einem Druck von ca. 20 bar einer Drucksteuerstufe 15 zugeleitet. Die Drucksteuerstufe 15 kann mittels eines Stellmotors 33 den Sauerstoffdruck zwischen 0 und 10 bar stufenlos variieren und dem Sauerstoff-Dosierzylinder 16 zuführen. Der Stellmotor 33 ist hierfür mit einer Verstelleinrichtung 34 (z.B. Potentiometer) verbunden, d.h., durch Verstellung z.B. des Potentiometers 34 kann der Druck im Sauerstoff-Dosierzylinder 16 variiert werden. Der Druck ist abhängig von der gewünschten Gasmischung, die im Brennraum 10 zur Behandlung der Werkstücke 11 benötigt wird.

Über die Brenngaszufuhrleitung 17 wird Brenngas (z.B. Wasserstoff, Erdgas, Methan) über ein auf einen Festwert eingestelltes Drosselventil 18 dem Brenngas-Dosierzylinder 19 mit einem konstanten Druck von z.B. 8 bar zugeführt.

Während des Füllvorgangs der Dosierzylinder 16, 19 sind die Ventile 20, 21 zwischen Mischblock 13 und Dosieranlage 12 geschlossen. Durch den Gasdruck der Gemisch-Komponenten werden die Kolben 22, 23 in den Dosierzylindern 16, 19 in eine bestimmte Stellung verschoben. Dabei wird die Verschiebung der Kolben 22, 23 mittels einer Kolbenweg-Meßeinrichtung 24, 35 erfaßt und eingestellt. Ist die gewünschte Stellung der Kolben 22, 23 und der gewünschte Druck erreicht, so werden die Zufuhrleitungen 14, 17 durch die Ventile 38, 39 geschlossen, während die Ventile 20, 21 zwischen Mischblock 13 und Dosieranlage 12 geöffnet werden. Die Betätigung der Ventile kann dabei über eine Steuerung 37 mit vorgegebenem Zeitablauf erfolgen.

Die Dosieranlage 12 enthält weiterhin einen Hydraulik- oder Pneumatikzylinder 25 mit Kolben 26 und Kolbenstange 27. Die Kolbenstangen 28, 29 der Dosierzylinder 16, 19 sind über ein Joch 30 mit der Kolbenstange 27 des Hydraulik- oder Pneumatikzylinders 25 formschlüssig verbunden. Die Anordnung ist derart aufgebaut, daß sie kräftesymmetrisch, d.h. momentfrei bleibt, auch bei unterschiedlichen und sich ändernden Drükken. Hierdurch wird eine gleichmäßige Durchmischung der aus den Dosierzylindern 16, 19 ausgeschobenen Gase bewirkt. Durch Beaufschlagung des Kolbens 26 mit Hydraulik- oder Pneumatikmittel wird der Kolben 26 im Zylinder 25 derart bewegt, daß sich diese Bewegung auf die Kolben 22, 23 der Dosierzylinder 16, 19 auswirkt.

Die gewünschte Mischung des Gasgemisches wird durch Verstellung der Drucksteuerstufe 15 mittels des Stellmotors 33 eingestellt. Wird z.B. der Sauerstoffdruck mittels der Drucksteuerstufe 15 auf 8 bar gestellt und beträgt der Druck in der Zufuhrleitung 17 für Brenngas ebenfalls 8 bar, so beträgt das Mischungsverhältnis der Gaskomponenten 1:1, wenn die Volumen von Brenngas- und Sauerstoff-Zylinder, d.h. die Durchmesser gleich sind. Diese können auch unterschiedlich sein.

Bestimmte Werkstücke müssen n-mal mit n-unterschiedlichen Gasgemischen bei verschiedenen Gasdrücken behandelt werden. Dies ist z.B. erforderlich, wenn Werkstücke zunächst mit einem bestimmten Gemisch unter einem bestimmten Druck entgratet werden, danach ein weiterer Bearbeitungsvorgang folgt und anschließend nochmals entgratet werden müssen. Über die Steuerung 37 können die einzelnen Daten gespeichert werden und in einer bestimmten Reihenfolge abgerufen werden.

Die Dosierzylinder 16, 19 für Sauerstoff und Brenngas sowie der Zylinder für Hydraulik- oder Pneumatikmittel 25 sind als Rohre ausgebildet, die zwischen den Flanschen 31, 32 fest verankert sind. Die beiden Flansche 31, 32 werden durch mehrere Zuganker mit beidseitigem Geweindeansatz und Muttern verspannt.

Bei der in der Figur dargestellten Ausführungsform liegen die Dosierzylinder 16, 19 und die Hydraulik- bzw. Pneumatikeinrichtung 25 bis 27 in einer Ebene. Die Erfindung könnte jedoch um weitere Dosierzylinder ergänzt werden; z.B. können je zwei gleichartige Dosierzylinder an den Ecken eines Quadrats diametral gegenüberliegend und die Einrichtung 25 bis 27 in der Mitte liegend angeordnet sein. Weiterhin kann in einer Ebene beidseitig des Hydraulikzylinders 25 bis 27 je ein Sauerstoffzylinder 16 und ein Brenngaszylinder 19 symmetrisch angeordnet sein.

Der Abschlußflansch 31 weist Gaszuführungsanschlüsse für Sauerstoff und Brenngas auf, wobei die Zufuhr zu den einzelnen Dosierzylindern mittels Gaszuführungsleitungen innerhalb des Abschlußflansches 31 erfolgt. Dies hat den Vorteil, daß die Anzahl der Rohrverschraubungen und damit mögliche Undichtigkeiten stark reduziert werden können.

**Patentanspruch**

Gaszufuhreinrichtung zum Einlassen eines aus zwei Komponenten bestehenden brennbaren Gasgemisches in einen Brennraum (10) zur Behandlung von Materialien (11) mit Temperatur- und Druckstößen durch Zünden des Gasgemisches, insbesondere für thermische Entgratanlagen, mit einer eine erste Vorrichtung (15) zum Einstellen des Fülldrucks enthaltenden ersten Zufuhrleitung (14) und einem an die erste Zufuhrleitung angeschlossenen ersten Dosierzylinder (16) mit Gasausstoßkolben (22) für die eine der beiden Gaskomponenten, mit einer eine zweite Vorrichtung (18) zum Einstellen des Fülldrucks enthaltenden zweiten Zufuhrleitung (17) und einem an die zweite Zufuhrleitung angeschlossenen zweiten Dosierzylinder (19) mit Gasaustoßkolben (23) für die andere der beiden Gaskomponenten, mit einer Vorrichtung (25—30) zum Betätigen der Gasausstoßkolben beim Füllvorgang des Brennraums (10) und mit einer Meß- und Einstellvorrichtung (24, 35, 37) zum Erfassen und Einstellen des Kolbenhubs und damit des Füllvolumens der Dosierzylinder, dadurch gekennzeichnet, daß die zweite Zufuhrleitung (17) als Vorrichtung zum Einstellen des Fülldrucks ein auf einen festen Wert eingestelltes Drosselventil (18) enthält, das den Fülldruck im zweiten Dosierzylinder konstant vorgibt, und daß in der ersten Gaszufuhrleitung (14) als Vorrichtung zum Einstellen des Fülldrucks eine Drucksteuerstufe (15) mit einem Stellmotor (33) angeordnet ist, der eine Stelleinrichtung (34) sowie eine mit dieser verbundene Steuereinrichtung (37) hat, in welcher die Daten für mehrere unterschiedliche Gasdrücke in dem Dosierzylinder in einer vorgegebenen Reihenfolge abrufbar gespeichert sind.

## Revendication

Installation d'alimentation en gaz pour introduire un mélange gazeux combustible formé de deux composants dans une chambre de combustion (10) pour le traitement de matériaux (11) par des chocs de température et de pression, par allumage du mélange gazeux notamment pour des installations d'ébavurage ou d'ébarbage thermiques, comportant une première conduite d'alimentation (14) avec un premier dispositif (15) pour régler la pression de remplissage et un premier cylindre de dosage (16) relié à la première conduite d'alimentation avec un piston d'expulsion de gaz (22) pour l'un des deux composants du gaz, et une seconde conduite d'alimentation (17) comportant un second dispositif (18) pour régler la pression de remplissage et un second cylindre de dosage (19) relié à cette seconde conduite d'alimentation, ce cylindre comportant un piston d'expulsion de gaz (23) pour l'autre composant du mélange gazeux, et un dispositif (25, 30) pour actionner les pistons d'expulsion des gaz lors de l'opération de remplissage de la chambre de combustion (10) ainsi qu'une installation de mesure et de réglage (24, 35, 37) pour détecter et régler la course de piston et ainsi le volume de remplissage des cylindres de dosage, caractérisée en ce que la seconde conduite d'alimentation (17) est réalisée sous la forme d'une soupape d'étranglement (18) réglée à une valeur fixe comme dispositif pour régler la pression de remplissage, et qui prédétermine à un niveau constant la pression de remplissage dans le second cylindre de dosage et en ce que dans la première conduite d'alimentation de gaz (14), il est prévu un étage de commande de pression (15) comme dispositif pour régler la pression de remplissage, avec un moteur de réglage (33), et qui comporte un dispositif de réglage (34) ainsi qu'un dispositif de commande (37) relié à celui-ci dans lequel sont mises en mémoire les données correspondant à des pressions de gaz différentes dans le cylindre de dosage en pouvant être appelées dans un order prédéterminé.

## Claim

Gas-supply device for admitting a combustible gas mixture consisting of two components into a combustion chamber (10) for handling materials (11) with temperature and pressure surges by ignition of the gas mixture, in particular for thermal deburring installations, having a first supply line (14), containing a first device (15) for setting the filling pressure, and a first metering cylinder (16) which is connected to the first supply line and has a gas-discharge piston (22) for one of the two gas components, having a second supply line (17), containing a second device (18) for setting the filling pressure, and a second metering cylinder (19) which is connected to the second supply line and has a gas-discharge piston (23) for the other of the two gas components, having a device (25—30) for actuating the gas-discharge piston during the filling operation of the combustion chamber (10) and having a measuring and setting device (24, 35, 37) for determining and setting the piston stroke and therefore the filling volume of the metering cylinders, characterized in that a second supply line (17), as a device for setting the filling pressure, contains a choke valve (18) which is set to a fixed value and constantly presets the filling pressure in the second metering cylinder, and that, as a device for setting the filling pressure, a pressure-control stage (15) with a servomotor (33) is arranged in the first gas-supply line (14), which servomotor (33) has a regulating device (34) and also a control device (37) which is connected to the latter and in which the data for several different gas pressures in the metering cylinder are stored in a predetermined sequence such that they can be recalled.

0 050 726